# EUROPÄISCHE PATENTSCHRIFT

(11) **EP 0 610 715 B1**
(45) Veröffentlichungstag und Bekanntmachung des Hinweises auf die Patenterteilung: **19.05.1999**
(21) Anmeldenummer: 94101063.9
(22) Anmeldetag: 25.01.1994
(51) Int. Cl.: B01D 53/00, B01D 63/08, C12M 3/06

(54) **Membranmodul zur Entfernung von gasförmigen Stoffen aus einem Gasstrom**
Membrane module for the removal of gaseous substances from a gas stream
Module à membrane pour séparer des substances gazeuses d'un courant de gaz

(30) Priorität: 10.02.1993 DE 4303936
(43) Veröffentlichungstag der Anmeldung: 17.08.1994
(73) Patentinhaber: W.L. Gore & Associates GmbH, 85636 Putzbrunn (DE)
(72) Erfinder: Kramer, Valentin, D-8152 Feldkirchen-Westerh. (DE); Ziegler, Gerd, D-8011 Vaterstetten (DE)
(74) Vertreter: Klunker . Schmitt-Nilson . Hirsch

(56) Entgegenhaltungen:
- WO-A-92/03534
- DE-A- 2 823 057
- DE-A- 3 542 599
- US-A- 3 984 324
- US-A- 4 735 718
- US-A- 5 116 506

## Beschreibung

Die Erfindung betrifft ein Membranmodul zur Entfernung von gasförmigen Stoffen aus einem Gasstrom, bestehend aus einer Vielzahl von rechtwinkligen, flächigen Membrantaschen aus einem gasdurchlässigen, flüssigkeitsdichten Material, die parallel zueinander und parallel zur Strömungsrichtung des Gasstromes angeordnet sind, wobei die Membrantaschen zur Aufnahme einer Suspension von Mikroorganismen oder einer anderen flüssigen Reaktionsmischung eingerichtet und über einen Zulauf beschickbar und einen Ablauf entleerbar sind und seitlich zur Strömungsrichtung des Gasstroms zwischen den Membrantaschen Abstandshalter vorgesehen sind, die einen Mindestabstand zwischen den Membrantaschen definieren, so daß durch die dadurch gebildeten freien Räume der Gasstrom fließen kann. Die Erfindung betrifft weiterhin eine Vorrichtung bei der die erfindungsgemäßen Module Verwendung finden.

Aus der DE-C-40 27 126 sind bereits Membranmodule der eingangs bezeichneten Art bekannt. Diese Module bestehen aus einem kastenförmigen Gehäuse, in dem die Membrantaschen, deren Außenmaße den Innenmaßen des Gehäuses entsprechen, angeordnet sind. Zwischen den Membrantaschen sind entlang der seitlichen Kanten stabförmige Abstandselemente vorgesehen, die einen bestimmten Abstand zwischen den Membrantaschen definieren. Das Membranmaterial kann zusätzlich Erhöhungen oder Verstärkungen aufweisen, so daß ein bestimmter Abstand zwischen zwei Membrantaschen über die gesamte Fläche sichergestellt ist. Jede der einzelnen Membrantaschen ist mit einer Zuleitung und einer Ableitung versehen, die in eine gemeinsame Versorgungs- bzw. Entsorgungsleitung münden. Das verwendete Membranmaterial ist gasdurchlässig und flüssigkeitsdicht, vorzugsweise wird eine Polyurethanfolie eingesetzt.

Verwendet man ein derartiges Membranmodul beispielsweise zur Abgasreinigung, sind erhebliche Membranflächen erforderlich. Um dieses Verfahren wirtschaftlich einsetzen zu können, muß der Herstellungsaufwand minimiert werden. Das Anschließen der für jede Tasche separaten Zu- und Ableitungen an eine gemeinsame Versorgungs- und Entsorgungsleitung ist zeitaufwendig, kompliziert und störungsanfällig. Als weiteren Nachteil muß die Tatsache angesehen werden, daß sich die Membrantaschen unter dem Gewicht der in den Taschen befindlichen Flüssigkeit einseitig auswölben und dadurch den freien Strömungsquerschnitt für den Gasdurchtritt verringern. Eine exakte Berechnung des Strömungswiderstandes ist unter diesen Umständen nur schwer möglich, da er sich zeitabhängig ändert.

Sind die Seitenflächen der Membrantaschen mit Erhöhungen versehen, verteuert sich die Herstellung der Membran und der Wirkungsgrad des Stoffaustauschs durch die Membran hindurch wird herabgesetzt.

Da die Membrantaschen lediglich seitlich gehalten sind, kann es vorkommen, daß die flexible Vorderkante unter dem Staudruck des Gasstromes umklappt und benachbarte, für den Gasdurchtritt vorgesehene, Zwischenräume verschließt.

Aus der DE-A-35 42 599 ist ein ähnliches Membranmodul bekannt, bei dem ein Abgasstrom und eine Mikroorganismensuspension im Gegenstromprinzip an einer chemisch und biologisch inerten Membran nach Art eines Plattenwärmeaustauschers vorbei geleitet wird. Dazu werden die beiden strömenden Medien zunächst zusammengefaßt und dann nacheinander in Teilströme aufgeteilt, die dann aneinander vorbeigeleitet werden. Über den konsruktiven Aufbau des Membranmoduls ist nichts ausgesagt.

Aus der DE-A-28 23 057 ist ein Flachmembran-Druckpermeationsmodul bekannt, das zum Auftrennen einer Flüssigkeit bestimmt ist. Die aufzutrennende Flüssigkeit wird dabei durch rundherum abgeschlossene Kammern geschickt, um eine sehr stabile Struktur des Druckpermeationsmoduls zu erhalten. Dabei wird vorgeschlagen, die aufzutrennende Flüssigkeit entweder in Parallelschaltung oder in Reihenschaltung an den Permeatkammern vorbeizuführen. Eine gleichzeitige parallele Anströmung mehrerer Membrantaschen, wie es die DE-C-40 27 126 vorschlägt, kann mit der Vorrichtung nach der DE-A 28 23 057 nicht durchgeführt werden.

Im Hinblick auf die vielfältigen Einsatzmöglichkeiten derartiger Module, beispielsweise zur Abgasreinigung, besteht ein Bedürfnis nach einem Membranmodul, das einfach aufgebaut ist und daher wirtschaftlich gefertigt werden kann, und das vorzugsweise so konstruiert ist, daß es auch über längere Betriebszeiten hinweg definierte Stoffaustauschverhältnisse bietet. Darüberhinaus soll der Wirkungsgrad der bekannten Membranmodule verbessert werden.

Erfindungsgemäß wird diese Aufgabe durch die im Kennzeichen des Anspruchs 1 aufgeführten Merkmale gelöst. Entscheidend bei der erfinderischen Lösung war die Erkenntnis, daß jede Membrantasche einen Rahmen aufweist, der beidseitig mit dem Membranmaterial bespannt werden kann. Das Membranmaterial wird mit dem Rahmen verschweißt oder verliebt, was insofern vorteilhaft ist, als häufig das Membranmaterial nicht mit sich selbst, wohl aber mit anderen Materialien verschweißt werden kann.

Das Innere der Membrantasche ist über Zulauf- und Ablaufbohrungen in den Rahmenschenkeln zugänglich. Stapelt man mehrere dieser Membrantaschen übereinander, so kommen die entsprechend angeordneten Bohrungen ebenfalls übereinander zu liegen und bilden einen Kanal, durch den das flüssige Reaktionsmedium in die Taschen eingeführt oder aus diesen abgezogen werden kann.

Die Membrantaschen werden normalerweise nicht direkt übereinandergelegt, sondern zwischen den Membrantaschen sind an den Seitenkanten Dichtungsstreifen angeordnet, deren Dicke den Raum definiert, der zwischen den Membrantaschen für die Gasströmung zur Verfügung steht. In den Dichtungen, die auch die Funktion der bekannten Abstandshalter erfüllen, sind ebenfalls Bohrungen angeordnet, deren Größe und Anordnung den Bohrungen in den Rahmen der Membrantaschen entspricht, so daß beim Übereinanderstapeln von Membrantaschen und Dichtungen die Zuführ- und Abführkanäle nicht unterbrochen werden. Ein Stapel von Membrantaschen wird jeweils durch eine Deckplatte und eine Bodenplatte abgeschlossen, in die Zulaufkanäle bzw. Ablaufkanäle eingeformt sind. Diese Kanäle stehen mit den Bohrungen, bzw. den durch diese Bohrungen gebildeten Kanälen in Verbindung.

Zwischen den Membrantaschen sind Stützstrukturen eingeschoben. Zur besseren Positionierung dieser Stützstrukturen ist es vorteilhaft, wenn die seitlichen Rahmenschenkel durch Querstege miteinander verbunden sind. Die Stützstrukturen können sich an diesen Querstegen abstützen. Als Stützstruktur hat sich eine steife Folie mit einem Zickzack-Profil bewährt. Die Folie kann beispielsweise aus Aluminium bestehen. Es ist aber auch möglich eine Stützstruktur in Form einer offenporigen Schicht zu verwenden, die aus biegesteifen Fasern oder Drähten gebildet ist. Entscheidend ist, daß die Struktur nur schwer komprimierbar ist und daß sie dem Gasstrom einen möglichst geringen Widerstand entgegensetzt.

Das derartig aufgebaute Membranmodul ist kompakt, besteht aus wenigen Einzelteilen und ist daher ohne großen Aufwand zusammenzubauen. Es bietet definierte Strömungsverhältnisse, die auch über längere Betriebszeiten konstant bleiben. In entsprechende Gehäuse eingebaut, lassen sich die Module leicht zu größeren Einheiten zusammenfassen.

Der Wirkungsgrad des Stoffaustausches in derartigen Modulen hängt, neben der Konstruktion der Module, die sich in allererster Linie auf die Strömungsverhältnisse auswirkt, auch von der Eignung der eingesetzten Membran ab. Neben der bereits erwähnten Polyurethanfolie ist es aus der Mikrobiologie bekannt, Zellkulturen in Membrantaschen zu züchten, die luftdurchlässig und flüssigkeitsdicht sind. Als Material für diese Membranen wurde Polyethylen und Polypropylen vorgeschlagen (US-A-3,184,395), Ethylen-Propylen-Copolymer (US-A-3,941,662), oder auch Silikongummi (WO-90/10690). Alle diese Membranen haben die Eigenschaft, daß sie gasdurchlässig sind, d. h. daß sie jedenfalls Sauerstoffmoleküle passieren lassen. Dies heißt jedoch noch nicht zwingend, daß größere, z. B. toxisch wirkende Moleküle die Membran in gleicher Weise durchsetzen können. Es besteht daher ein dringendes Bedürfnis die verwendeten Membranmaterialien zu optimieren und den Wirkungsgrad zu verbessern. Überraschenderweise wurde gefunden, daß sich eine mikroporöse, gereckte PTFE-Membran besonders gut für den Stoffaustausch eignet. Die Membranen sind unter dem Handelsnamen GORETEX (eingetragenes Warenzeichen der W. L. Gore & Associates) auf dem Markt erhältlich. Wegen ihrer Eigenschaft, Wasserdampf und Luft durchzulassen, Wasser aber zurückzuhalten, werden derartige Membranen im großen Maßstab bei der Herstellung von Sportkleidung verarbeitet. Die Herstellung derartiger Membranen ist in den US-Patentschriften 3,953,566 und 4,187,390 beschrieben, auf deren Offenbarung ausdrücklich Bezug genommen wird.

Da man Foliendicke und Porendurchmesser derartiger Membranen gut einstellen kann, läßt sich für jedes Stoffaustauschsystem die geeignete Membran durch wenige Routineversuche ermitteln. Der Unterschied im Wirkungsgrad eines Membranmoduls, das mit Polyurethanfolie ausgerüstet ist, und eines Membranmoduls, das mit der erfindungsgemäßen PTFE-Membran ausgerüstet ist, unterscheidet sich um wenigstens eine Größenordnung. Wegen ihrer einfachen Konstruktion und dem hohen Wirkungsgrad eignen sich die erfindungsgemäßen Membranmodule nicht nur für die Abgasreinigung mit Hilfe von Mikroorganismen, sondern sind ganz allgemein als Reaktoren für das Stoffaustauschsystem gasförmig/flüssig einsetzbar. Besonders vorteilhaft ist dafür das hydrophobe Verhalten der PTFE-Membran und die in weiten Grenzen einstellbare Porengröße.

Nachfolgend soll ein Ausführungsbeispiel der Erfindung anhand der beigefügten Zeichnung beschrieben werden. Darin zeigen
- Figur 1a:: eine schematische Seitenansicht eines Membranmoduls,
- Figur 1b:: eine Draufsicht auf ein solches Modul,
- Figur 2:: einen schematischen Querschnitt durch das Membranmodul,
- Figur 3:: eine Draufsicht auf den Rahmen, der Teil einer Membrantasche ist.

Das Membranmodul 10 besteht aus einer Vielzahl von übereinander angeordneten Membrantaschen 12, die durch seitliche Abstandshalter, bzw. Dichtungen 14 voneinander getrennt werden. Die Dicke der Dichtungen 14 bestimmt die Weite des Raumes, der zwischen den einzelnen Membrantaschen 12 frei bleibt und der von dem zu reinigenden Gas durchströmt werden muß.

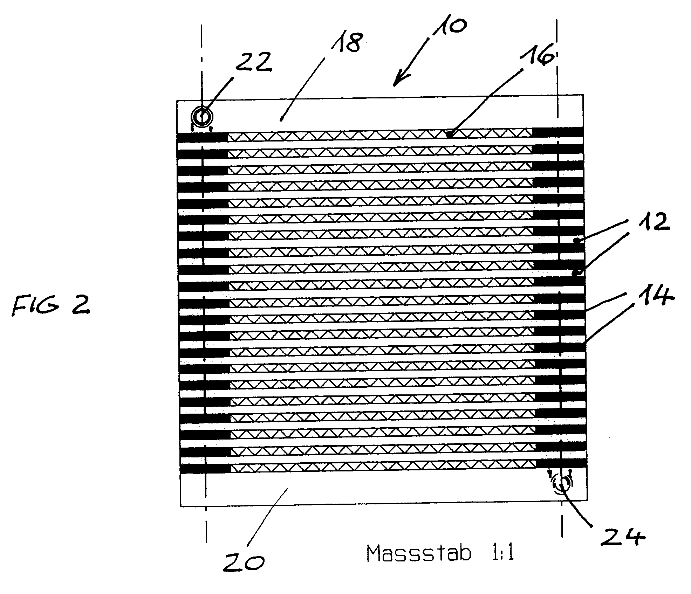

Wie besonders gut aus Figur 2 zu ersehen ist, ist dieser freie Raum zwischen den Membrantaschen von einer Stützstruktur 16 ausgefüllt, die bei der gezeigten Ausführungsform eine steife Folie mit Zickzack-Profil ist. Andere Stützstrukturen sind jedoch ebenfalls denkbar. Wichtig dabei ist, daß der Strömungsquerschnitt für das durchströmende Gas möglichst wenig vermindert wird und die Schicht weitgehend inkompressibel ist.

Der Stapel der übereinandergelegten Membrantaschen 12 wird von einer Deckelplatte 18 und einer Bodenplatte 20 abgeschlossen. In diesen Platten sind Zulaufkanäle und Ablaufkanäle 22, 24 ausgebildet, über welche sämtliche Membrantaschen 12 gemeinsam versorgt werden. Diese Kanäle können beispielsweise in Form von in die Unterseite von Deckel bzw. Boden eingefrästen Nuten ausgebildet sein. Die Verbindung dieser dichtend auf dem Stapel von Membrantaschen aufliegenden Nuten mit den Zuführ- und Abführbohrungen für die einzelnen Membrantaschen ist besonders einfach.

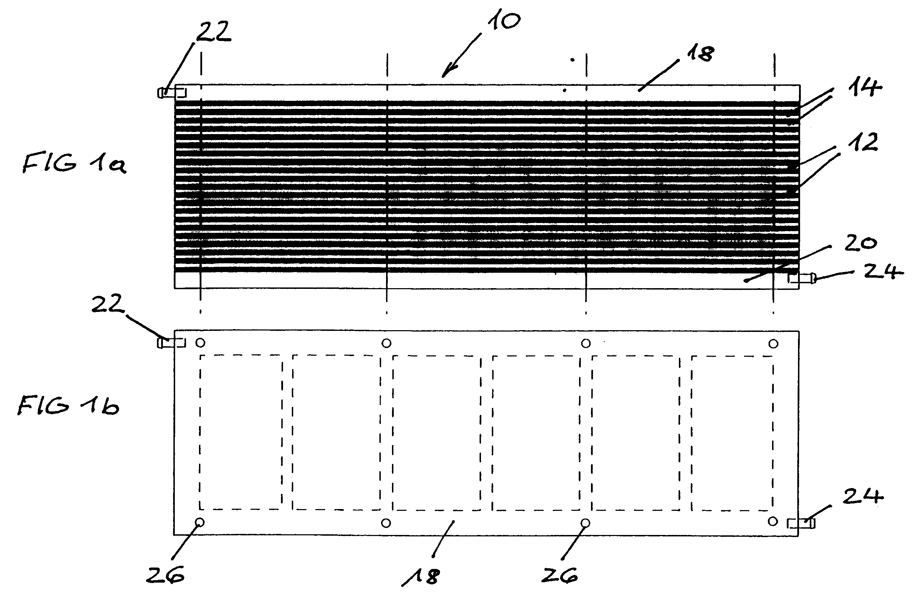

Der Stapel von Membrantaschen mit Deckel und Boden kann durch entsprechende Schraubbolzen zusammengehalten werden, die durch entsprechende Bohrungen in den Dichtungen 14 und den Membrantaschen 12 von der Deckelplatte 18 bis zur Bodenplatte 20 reichen und diese zusammenspannen. Derartige Bohrungen für solche Befestigungsbolzen sind in Figur 1b mit der Bezugsziffer 26 gekennzeichnet.

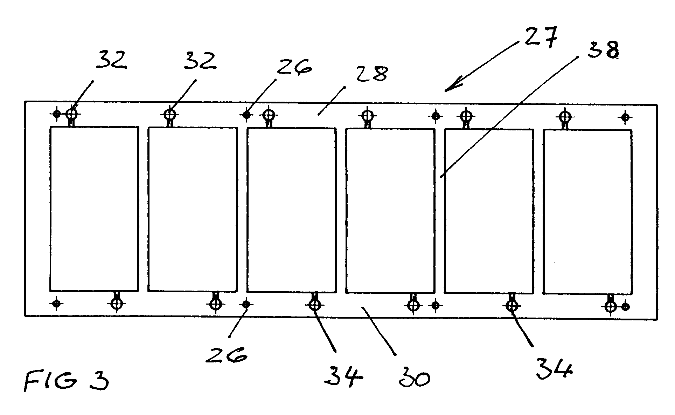

In Figur 3 ist ein Rahmen gezeigt, der wesentlicher Bestandteil jeder Membrantasche ist. Der Rahmen 27 ist im wesentlichen rechtwinklig und weist zwei Seitenschenkel 28 und 30 auf, die durch Querstege 38 miteinander verbunden sind. Die Querstege 38 sind nicht unbedingt erforderlich, sie sind nur insofern vorteilhaft, als sich die Stützstrukturen 16 im zusammengebauten Zustand des Membranmoduls an diesen Stegen abstützen können. Die beiden Schenkel 28, 30 sind endseitig durch entsprechende kurze Schenkel miteinander verbunden. Insgesamt wird ein geschlossener Rahmen gebildet, dessen Dicke das innere Volumen der Membrantasche bestimmt. Aus Figur 2 ist es ersichtlich, daß die Dicke des Rahmens 27 etwa der Dicke der seitlichen Abstandshalter, bzw. Dichtungen 14 entsprechen kann.

In die beiden sich gegenüberliegenden Rahmenschenkel 28 und 30 sind Zulaufbohrungen 32 und Ablaufbohrungen 34 eingebracht. Die Bohrungen sind über ausgestanzte Nuten mit dem von den Rahmenschenkeln umschlossenen Innenraum des Rahmens verbunden.

Auf dem Rahmen wird beidseitig eine dünne Membran aufgeschweißt, bzw. aufgeklebt. Die Membran wird nur an den Stellen der Zulaufbohrungen 32 und Ablaufbohrungen 34 entsprechend unterbrochen. Beim gezeigten Ausführungsbeispiel des Rahmens werden durch die Querstege 38 sechs Kammern definiert, die jeweils von einer Zuführbohrung 32 beschickt und einer Ablaufbohrung 34 entsorgt werden. Die Anordnung der Querstege 38 ist nicht unbedingt erforderlich. Fehlen derartige Stege, würde auch eine Zulaufbohrung 32 und eine Ablaufbohrung 34 ausreichen.

Das Material der Rahmen ist vorzugsweise aus Polypropylen, jedes andere ausreichend steife Kunststoffmaterial ist aber ebenfalls geeignet. Beachtet werden sollte, daß das Rahmenmaterial so gewählt wird, daß es sich mit der darüber gespannten Membran leicht verschweißen kann. Im Falle einer mikroporösen, gereckten PTFE-Membran eignet sich besonders eine 0,03 mm dicke und 0,2 µm Porengröße aufweisende GORETEX Membran. PTFE-Membranen lassen sich in der Regel nicht, oder nur schwer miteinander verschweißen. Eine Verschweißung mit dem aus Polypropylen bestehenden Rahmen ist jedoch ohne Schwierigkeiten möglich.

Es kann vorteilhaft, sein die Membran mit einem luftdurchlässigen Trägermaterial zu verbinden, da die Membran selbst sehr dünn ausgebildet sein kann und daher mechanisch nicht sehr stabil ist. Dieses Trägermaterial kann aus einem Vlies, einer Lochfolie oder aus einem textilen Material bestehen. Die Membranen sind in diesem Fall mit dem Trägermaterial und das Trägermaterial mit dem Rahmen verbunden, vorzugsweise verschweißt oder verliebt. Die Kombination der Membran mit einem Trägermaterial verbessert die Steifigkeit der Membran und ermöglicht eine gute Verschweißung mit dem Rahmen.

Eine Vielzahl von Membrantaschen 12 wird jeweils übereinander gestapelt, wie das aus den Figuren 1a und 2 ersichtlich ist. Da in jedem Rahmen 27 die Bohrungen 32 und 34 identisch angeordnet sind, bilden die Bohrungen mit entsprechenden in den Abstandshaltern, bzw. Dichtungen 14 angeordneten Bohrungen Kanäle, durch die das über die Zulaufkanäle 22 und Ablaufkanäle 24 fließende, flüssige Reaktionsmedium in die Membrantaschen 12 einfließen, und aus diesen abgezogen werden kann. Die Vorsehung separater Leitungen entfällt völlig. Die Module werden dadurch äußerst kompakt und wenig störanfällig. Das aufwendige Anschließen von einzelnen Leitungen für jede Membrantasche, wie dies im Stand der Technik üblich war, entfällt vollständig.

Mehrere derartige Module können nun in bekannter Art und Weise in entsprechenden Gehäusen angeordnet und entsprechend verschaltet werden. Aus Figur 2 ist besonders gut ersichtlich, daß der freie Querschnitt, der für die Durchströmung des zu reinigenden Gases zur Verfügung steht, eindeutig definiert ist und infolge der zwischen den Membrantaschen angeordneten Stützstrukturen sich nicht ändert.

Die einfache und wenig aufwendige Konstruktion der Module ermöglicht einen wirtschaftlichen Einsatz auch auf anderen Gebieten, als der mikrobiologischen Abgasreinigung. Ein Einsatz auf letztgenanntem Gebiet ist jedoch besonders vielversprechend, insbesondere wenn als Membranmaterial eine geeignet ausgewählte mikroporöse, gereckte PTFE-Membran eingesetzt wird.

## Patentansprüche

1. Membranmodul zur Entfernung von gasförmigen Stoffen aus einem Gasstrom, bestehend aus einer Vielzahl von flächigen Membrantaschen aus einem gasdurchlässigen, flüssigkeitsdichten Material, die parallel zueinander und parallel zur Strömungsrichtung eines das Membranmodul anströmenden Gases angeordnet sind, wobei die Membrantaschen zur Aufnahme einer flüssigen Reaktionsmischung oder einer Suspension von Mikroorganismen eingerichtet und über einen Zulauf beschickbar und einen Ablauf entleerbar sind und seitlich zur Strömungsrichtung des Gasstroms zwischen den Membrantaschen Abstandshalter vorgesehen sind, die einen Mindestabstand zwischen den Membrantaschen definieren, wodurch freie Räume gebildet werden, durch die der Gasstrom fließen kann,
dadurch gekennzeichnet, daß jede Membrantasche (12) einen flachen, umlaufenden Rahmen (27) aufweist, der die Außenkontur der Tasche bestimmt, und dieser Rahmen (27) beidseitig mit dem Membranmaterial bespannt ist, das dichtend mit dem Rahmen (27) verbunden ist, und daß der Rahmen (27) senkrecht zur Rahmenebene wenigstens eine Zulaufbohrung (32) und wenigstens eine Ablaufbohrung (34) aufweist, die die Membran durchsetzen und zwischen den Membranen durch eine weitere Bohrung oder eine Nut mit dem Innenraum verbunden sind, der von den Membranen und dem Rahmen (27) umschlossen ist, und daß mehrere Membrantaschen (12) derart übereinander gestapelt sind, daß die Zulaufbohrungen (32) und die Ablaufbohrungen (34) jeweils übereinander liegen und durchgehende Kanäle bilden, wobei die zwischen den Membrantaschen seitlich angeordneten Abstandshalter als Dichtungen ausgebildet sind, die Bohrungen aufweisen, die in Größe und Anordnung mit den Zulauf- und Ablaufbohrungen (32; 34) in den Rahmen (27) der Membrantaschen (12) übereinstimmen, und daß der Stapel von einer Deckplatte (18) und einer Bodenplatte (20) abgeschlossen ist, wobei in die Deckplatte und/oder Bodenplatte Zulaufkanäle (22) und Ablaufkanäle (24) eingeformt sind, die einerseits mit den Zulaufbohrungen (32) und andererseits mit den Ablaufbohrungen (34) in Verbindung stehen.

2. Membranmodul nach Anspruch 1,
dadurch gekennzeichnet, daß die Rahmen (27) rechteckig sind und die Zulauf- und Ablaufbohrungen (32; 34) in jeweils gegenüberliegenden Rahmenschenkeln (28; 30) angeordnet sind.

3. Membranmodul nach Anspruch 1 oder 2,
dadurch gekennzeichnet, daß die Rahmenschenkel (28;30) durch Querstege (32) miteinander verbunden sind.

4. Membranmodul nach einem der Ansprüche 1 bis 3,
dadurch gekennzeichnet, daß in einem Rahmenschenkel (28) mehrere Zulaufbohrungen (32) und in dem gegenüberliegenden Schenkel mehrere Ablaufbohrungen (34) angeordnet sind.

5. Membranmodul nach einem der Ansprüche 1 bis 4,
dadurch gekennzeichnet, daß das Membranmaterial beidseitig auf dem Rahmen (27) aufgeschweißt oder aufgeklebt ist.

6. Membranmodul nach einem der Ansprüche 1 bis 5,
dadurch gekennzeichnet, daß in dem Raum zwischen den Membrantaschen eine Stützstruktur (16) angeordnet ist, die den Abstand zwischen den Membrantaschen über die gesamte Fläche der Tasche definiert und die Durchströmung des freien Raumes zwischen den Membrantaschen nur unwesentlich behindert.

7. Membranmodul nach Anspruch 6,
dadurch gekennzeichnet, daß die Stützstruktur eine steife Folie (16) mit Zickzack-Profil ist.

8. Membranmodul nach Anspruch 6,
dadurch gekennzeichnet, daß die Stützstruktur eine offenporige Struktur aus biegesteifen Fasern oder Draht ist.

9. Vorrichtung zur Entfernung von gasförmigen Stoffen aus einem Gasstrom,
dadurch gekennzeichnet, daß in einem Gehäuse mehrere Membranmodule gemäß einem der Ansprüche 1 bis 8 derart angeordnet sind, daß sie von einem Gasstrom parallel oder nacheinander durchströmbar sind.

## Claims

1. A membrane module for removing gaseous substances from a gas stream consisting of a plurality of flat membrane pockets made of a gas-permeable, liquid-tight material and disposed parallel to each other and parallel to the direction of flow of a gas flowing against the membrane module, the membrane pockets being adapted to receive a liquid reaction mixture or a suspension of microorganisms and be charged via an inlet and emptied via an outlet, and spacers being provided between the membrane pockets laterally to the direction of flow of the gas stream to define a minimum distance between the membrane pockets, thereby forming free spaces through which the gas stream can flow,
characterized in that each membrane pocket (12) has a flat, peripheral frame (27) determining the outside contour of the pocket, and said frame (27) is covered on both sides with the membrane material which is connected with the frame (27) in sealing fashion, and the frame (27) has at least one inlet bore (32) and at least one outlet bore (34) perpendicular to the plane of the frame which penetrate the membrane and are connected between the membranes by a further bore or a groove with the interior enclosed by the membranes and the frame (27), and a plurality of membrane pockets (12) are stacked in such a way that the inlet bores (32) and the outlet bores (34) are located one above the other in each case and form continuous channels, the spacers disposed laterally between the membrane pockets being formed as seals which have bores corresponding in size and arrangement to the inlet and outlet bores (32; 34) in the frames (27) of the membrane pockets (12), and the stack is ended by a cover plate (18) and a baseplate (20), inlet channels (22) and outlet channels (24) being formed in the cover plate and/or baseplate to communicate with the inlet bores (32), on the one hand, and with the outlet bores (34), on the other hand.

2. The membrane module of claim 1, characterized in that the frames (27) are rectangular and the inlet and outlet bores (32; 34) are disposed in opposite frame pieces (28; 30).

3. The membrane module of claim 1 or 2, characterized in that the frame pieces (28; 30) are interconnected by transverse bars (32).

4. The membrane module of any of claims 1 to 3, characterized in that a plurality of inlet bores (32) are disposed in one frame piece (28) and a plurality of outlet bores (34) in the opposite piece.

5. The membrane module of any of claims 1 to 4, characterized in that the membrane material is welded or glued to the frame (27) on both sides.

6. The membrane module of any of claims 1 to 5, characterized in that a supporting structure (16) is disposed in the space between the membrane pockets, said structure defining the distance between the membrane pockets over the total surface of the pocket and hardly hindering flow through the free space between the membrane pockets.

7. The membrane module of claim 6, characterized in that the supporting structure is a stiff foil (16) with a zigzag profile.

8. The membrane module of claim 6, characterized in that the supporting structure is an open-pore structure of bending-resistant fibers or wire.

9. An apparatus for removing gaseous substances from a gas stream, characterized in that a plurality of the membrane modules of any of claims 1 to 8 are disposed in a housing in such a way that a gas stream can flow through them in parallel or successively.

## Revendications

1. Module à membrane pour séparer des substances gazeuses d'un courant de gaz, comportant plusieurs poches de membrane plates qui sont réalisées dans une matière perméable au gaz et étanche aux liquides et sont disposées parallèlement les unes aux autres et parallèlement au sens du courant d'un gaz s'écoulant sur le module à membrane, les poches de membrane étant disposées pour recevoir un mélange réactionnel fluide ou une suspension de micro-organismes, pouvant être alimentées par l'intermédiaire d'une conduite d'admission et vidées par l'intermédiaire d'une conduite d'évacuation, et latéralement par rapport au sens du courant de gaz, des pièces d'écartement qui définissent une distance minimale entre les poches de membrane, étant prévues entre les poches de membrane de telle sorte que le courant de gaz peut s'écouler par les espaces libres ainsi formés, caractérisé en ce que chaque poche de membrane (12) présente un cadre (27) plat et périphérique qui détermine le contour extérieur de la poche, en ce que ce cadre (27) est recouvert des deux côtés par la matière de membrane assemblée de manière étanche au cadre (27), en ce que le cadre (27) présente perpendiculairement au plan du cadre, au moins un orifice d'admission (32) et au moins un orifice d'évacuation (34) qui traversent la membrane et sont reliés, par un autre orifice ou une rainure, à l'espace intérieur qui est entouré par les membranes et le cadre (27), en ce que plusieurs poches de membrane (12) sont empilées les unes au-dessus des autres de telle sorte que les orifices d'admission (32) et les orifices d'évacuation (34) se trouvent respectivement les uns au-dessus des autres et forment des canaux continus, les pièces d'écartement disposées latéralement entre les poches de membrane étant conçues comme des joints d'étanchéité présentant des orifices qui, du point de vue de la dimension et de la disposition, coïncident avec les orifices d'admission et d'évacuation (32 ; 34) réalisés dans le cadre (27) des poches de membrane (12) et en ce que la pile est fermée par une plaque de recouvrement (18) et une plaque de fond (20), à l'occasion de quoi dans la plaque de recouvrement et/ou la plaque de fond sont formés des canaux d'admission (22) et d'évacuation (24) qui d'une part, sont reliés aux orifices d'admission (32) et d'autre part, sont reliés aux orifices d'évacuation (34).

2. Module à membrane selon la revendication 1, caractérisé en ce que les cadres (27) sont rectangulaires et en ce que les orifices d'admission et d'évacuation (32 ; 34) sont disposés dans des montants de cadre (28 ; 30) respectivement opposés.

3. Module à membrane selon la revendication 1 ou 2, caractérisé en ce que les montants de cadre (28 ; 30) sont assemblés l'un avec l'autre par des traverses (32).

4. Module à membrane selon l'une quelconque des revendications 1 à 3, caractérisé en ce que, dans un montant de cadre (28), sont disposés plusieurs orifices d'admission (32) et dans le montant opposé, plusieurs orifices d'évacuation (34).

5. Module à membrane selon l'une quelconque des revendications 1 à 4, caractérisé en ce que la matière de membrane est soudée ou collée des deux côtés sur le cadre (27).

6. Module à membrane selon l'une quelconque des revendications 1 à 5, caractérisé en ce que, dans l'espace entre les poches de membrane est disposée une structure de soutien (16) qui définit la distance entre les poches de membrane sur toute la surface de la poche et n'obstrue le passage du courant dans l'espace libre entre les poches de membrane que de manière insignifiante.

7. Module à membrane selon la revendication 6, caractérisé en ce que la structure de soutien est une feuille rigide (16) avec un profil en zigzag.

8. Module à membrane selon la revendication 6, caractérisé en ce que la structure de soutien est une structure à pores ouverts réalisée en fibres ou fils métalliques rigides à la flexion.

9. Dispositif pour séparer des substances gazeuses d'un courant de gaz, caractérisé en ce que plusieurs modules à membrane réalisés selon l'une quelconque des revendications 1 à 8 sont disposés dans un boitier de telle sorte qu'ils peuvent être traversés par un courant de gaz parallèlement ou successivement.
